# FASCICULE DE BREVET EUROPEEN

(11) **EP 2 697 274 B1**
(45) Date de publication et mention de la délivrance du brevet: **03.06.2015**
(21) Numéro de dépôt: 12714008.5
(22) Date de dépôt: 13.04.2012
(51) Int. Cl.: C08F 220/26, C04B 24/24, C04B 24/26, C04B 28/00, C08F 8/40

(54) **COPOLYMÈRES À GROUPEMENTS GEM-BISPHOSPHONÉS**
COPOLYMERE MIT GEM-BISPHOSPHONAT-GRUPPEN
COPOLYMERS HAVING GEM-BISPHOSPHONATE GROUPINGS

(30) Priorité: 15.04.2011 FR 1153312
(43) Date de publication de la demande: 19.02.2014
(73) Titulaire: Chryso, 92440 Issy-Les-Moulineaux (FR)
(72) Inventeur: CHOUGRANI, Kamel, F-45470 Loury (FR); LEISING, Frédéric, F-60300 Avilly Saint Leonard (FR)
(74) Mandataire: Blot, Philippe Robert Emile
(86) Numéro de dépôt international: PCT/EP2012/056840
(87) Numéro de publication internationale: WO 2012/140235

(56) Documents cités:
- WO-A2-2007/053563
- FR-A1- 2 892 420
- JP-B2- 2 759 688

## Description

La présente invention concerne des copolymères à groupements gem-bisphosphonés, un procédé pour leur préparation et leur utilisation à titre de fluidifiants de suspensions de particules minérales, notamment des compositions de ciments et de formulations de plâtre.

### [Etat de la technique]

Généralement, on ajoute aux compositions de ciment des adjuvants permettant d'améliorer leurs propriétés. Parmi les propriétés fondamentales des compositions de ciment sont les propriétés rhéologiques et leur évolution avec le temps, liées à l'ouvrabilité.

On utilise en particulier des fluidifiants ou plastifiants, lesquels ont pour effet de fluidifier les compositions de ciment et permettent ainsi de réduire la quantité d'eau ajoutée, ce pourquoi ils sont également désignés comme réducteurs d'eau. La composition présente alors une densité plus élevée et résulte en un matériau présentant une résistance mécanique plus importante.

Certains polymères solubles, appelés superplastifiants, permettent de réduire davantage la quantité d'eau. On connaît notamment des superplastifiants du type des acides polycarboxyliques polyalkoxylés (PCP).

Le document FR 2892420 décrit des superplastifiants à groupes phosphonés et polyoxyalkylés pour la fluidification de suspensions de particules minérales, dans lesquels les groupes phosphonés sont des groupes amino-bisalkylènephosphoniques de formule (A) suivante : 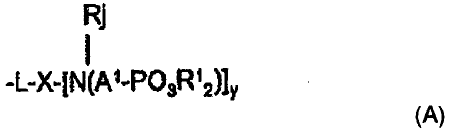 dans laquelle L représente un groupe de liaison à la chaîne principale et X est un groupe alkylène ou oxyalkylène. Les monomères phosphonés peuvent être obtenus notamment par diphosphonation selon les conditions de la réaction de MOEDRITZER - IRANI, par réaction d'une amine avec du formaldéhyde et de l'acide phosphoreux.

Pour accéder à ces structures, la modification chimique d'un polymère par post-greffage est aussi proposée. Ce procédé comporte deux étapes, à savoir la copolymérisation d'un acide carboxylique insaturé avec un ester (méth)acrylique polyéthoxylé suivie du greffage d'un synthon alcool ou amine phosphoné ou, en variante, la polymérisation de l'acide carboxylique insaturé puis une estérification par des composés polyoxyalkylés suivie du greffage d'un synthon phosphoné.

### [Problème technique]

Le but de l'invention est de proposer de nouveaux copolymères modifiés utiles à titre d'adjuvants pour suspensions de particules minérales.

Un autre but est de proposer un procédé de préparation de ces copolymères simple et économique et en particulier ne nécessitant pas l'utilisation de formaldéhyde.

Un autre but encore est de proposer des adjuvants pour suspensions de particules minérales présentant un pouvoir réducteur d'eau important, un bon maintien de rhéologie, une faible sensibilité aux sulfates alcalins et aux argiles et une bonne robustesse vis-à-vis de différents ciments.

### [Résumé de l'invention]

Les buts évoqués ci-dessus sont atteints selon l'invention par des copolymères comportant des groupements gem-bisphosphoniques.

Aussi, selon l'invention est proposé un copolymère comprenant une chaîne principale hydrocarbonée et des groupes latéraux, dans lequel les groupes latéraux comprennent des groupes carboxyliques, des groupes polyoxyalkylés et des groupes gem-bisphosphonés.

Selon un deuxième aspect, l'invention vise un procédé de préparation de ces copolymères comprenant les étapes consistant à :
(i) polymériser un monomère portant un groupe carboxylique, éventuellement en présence d'un monomère portant un groupe polyoxyalkylé; et
(ii) greffer le polymère obtenu avec un composé réactif gem-bisphosphoné.

Le copolymère gem-bisphosphoné ainsi obtenu est avantageusement formulé avant utilisation, de préférence sous forme de solution, notamment de solution aqueuse. La formulation peut également comporter des additifs habituels en la matière.

Selon un autre aspect, l'invention vise donc un adjuvant pour suspensions de particules minérales comprenant le copolymère selon l'invention sous forme de solution dans un solvant approprié ou sous forme sèche, notamment de poudre.

Par ailleurs, l'invention vise selon un autre aspect l'utilisation du copolymère selon l'invention pour la fluidification de suspensions de particules minérales et/ou pour le maintien de l'ouvrabilité de liants hydrauliques. Elle vise également l'utilisation du copolymère selon l'invention pour réduire la sensibilité de compositions hydrauliques aux argiles et sulfates alcalins.

Enfin, selon un dernier aspect, l'invention vise une composition de particules minérales comprenant le copolymère selon l'invention.

### [Définitions]

Dans le cadre du présent exposé, on entend par le terme «suspension de particules minérales » ou « composition hydraulique » tout liant à prise hydraulique, c'est-à-dire notamment outre les ciments tels que les ciments Portland, les ciments alumineux, les mortiers comprenant en outre des granulats fins, les bétons comprenant en outre des granulats grossiers ou encore les sulfates de calcium anhydres ou semihydratés. Le terme englobe également les charges minérales inertes telles que les sulfates de calcium dihydratés ainsi que le carbonate de calcium, la silice, l'hydroxyde de titane et les composés argileux.

On entend par le terme « chaîne hydrocarbonée » un groupe comportant des atomes de carbone et d'hydrogène, aliphatique, saturé ou insaturé, aromatique, arylalkyle ou alkylaryle, linéaire ou ramifié et éventuellement interrompu et/ou terminé par un ou plusieurs hétéroatomes tels que S, O, N, P.

On entend par le terme « groupe gem-bisphosphoné » désigner des groupes comportant deux groupes phosphonate liés à un même atome de carbone. Ces groupements possèdent donc une liaison P-C-P.

On entend par le terme « groupe alkyle » un groupe alkyle linéaire, ramifié ou cyclique.

On entend de la même façon par le terme « groupe alkylène » un groupe alkylène linéaire ou cyclique.

### [Description détaillée de l'invention]

Les copolymères selon l'invention sont des copolymères peignes comportant une chaîne principale hydrocarbonée d'une part et des groupes latéraux d'autre part. Ils sont caractérisés en outre par la présence à titre de groupes latéraux de groupes carboxyliques, des groupes polyoxyalkylés et des groupes gem-bisphosphonés.

La présence simultanée de ces trois types de groupes confère au copolymère les propriétés intéressantes à titre d'adjuvant, notamment de superplastifiant, pour des suspensions de particules minérales.

### [Copolymères]

Dans leur définition la plus large, les copolymères proposés selon l'invention sont des polymères de type PCP modifiés comportant des groupes gem-bisphosphonés.

Le polymère est de type peigne, comportant une chaîne principale et des groupes latéraux. La chaîne principale hydrocarbonée ne comprend de préférence pas d'hétéroatomes. Particulièrement préférée est une chaîne principale linéaire.

Selon l'invention, le copolymère comprend par ailleurs des groupes latéraux comportant des groupes carboxyliques et des groupes polyoxyalkylés, et en outre des groupes gem-bisphosphonés. Avantageusement, les groupes latéraux polyoxyalkylés sont liés à la chaîne principale par une liaison ester, éther ou amide.

De manière préférée, les groupes gem-bisphosphonés répondent à la formule (IA) ci-dessous : 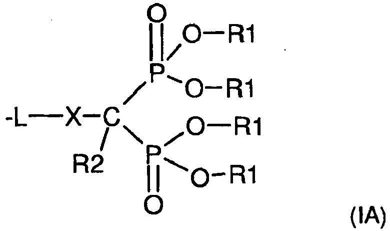 dans laquelle :
L représente un groupe de liaison à la chaîne principale, en particulier une liaison, un atome d'oxygène, un groupe -NR₄-, (R₄ pouvant être hydrogène ou un groupe alkyle en C₁ à C₆), ou un groupe alkylène, de préférence, L est un atome d'oxygène ou un groupe -NR₄-;
X est un groupe espaceur, en particulier un groupe alkylène en C₁ à C₂₀ éventuellement substitué ou un enchaînement de groupes de formule -(QO)ₙ- dans laquelle Q représente un groupe alkylène de 2 à 4 atomes de carbone ou un mélange de ces groupes d'alkylène, n étant un nombre entier variant de 1 à 500, de préférence, X est un groupe alkylène en C₁ à C₆;
R1 est, indépendamment les uns des autres, un groupe monovalent, notamment hydrogène, un groupe alkyle de C₁ à C₆ ou groupe de formule -(QO)ₙR₅ dans laquelle Q représente un groupe alkylène de 2 à 4 atomes de carbone ou un mélange de ces groupes d'alkylène, n est un nombre entier variant de 1 à 500 et R₅ est hydrogène ou un alkyle en C₁ à C₃, ou R1 est un cation, notamment un cation alcalin, alcalino-terreux ou ammonium; et
R2 est un groupe monovalent, notamment un atome d'hydrogène ou un groupe hydroxyle ou un groupe alkyle en C₁ à C₁₀, de préférence, R2 est un groupe hydroxyle.

Le groupement L est le plus souvent lié à un groupe carboxylique du copolymère et l'atome d'oxygène y forme dès lors une fonction ester et les groupes amines une fonction amide.

La proportion des groupes gem-bisphosphonés respectifs dans le copolymère selon l'invention peut varier largement. En particulier, les copolymères comprennent 0,1 à 60 %, en particulier 1 à 40% et tout particulièrement 2 à 10% en nombre de groupes latéraux gem-bisphosphonés.

Le copolymère comporte également à titre de groupes latéraux des groupes polyoxyalkylés. Ces groupes polyoxyalkylés peuvent être liés à la chaîne principale directement ou par l'intermédiaire de groupes formés avec les fonctions carboxyliques présentes, notamment par une liaison ester ou amide.

Ils peuvent également être intégrés dans les groupes gem-bisphosphonates, notamment de formule (I).

Les groupes polyoxyalkylés peuvent être notamment de formule (II) ci-dessous :

-Rₑ-Z-A (II)

dans laquelle :
Rₑ est un groupe alkylène en C₁ à C₁₂ ou un groupe C=O ou encore absent ; et
Z est un atome d'oxygène ou un groupe N-R⁴, R⁴ pouvant être un hydrogène ou un groupe alkyle en C₁ à C₆ ; et
A est un groupe de formule -(QO)ₙ-R³ dans laquelle :
   Q représente un groupe alkylène de 2 à 4 atomes de carbone ou un mélange de ces groupes d'alkylènes ;
   n est un nombre entier variant de 1 à 500 ; et
   R³ représente un atome d'hydrogène ou un groupe alkyle, aryle, alkylaryle ou arylalkyle en C₁ à C₁₂, de préférence méthyle.

Le copolymère comprend en général 0,001 à 80 % en nombre, en particulier 10 à 50% en nombre de groupes polyoxyalkylés.

Selon l'invention, le copolymère comporte par ailleurs des groupes carboxyliques. De préférence, les groupes carboxyliques répondent à la formule (III) ci-dessous :

-C(O)-O-R_{d} (III)

dans laquelle :
R_{d} représente H ou un groupe alkyle, aryle, alkylaryle ou arylalkyle en C₁ à C₁₂, ou un cation alcalin, alcalino-terreux ou ammonium.

La proportion des groupes carboxyliques dans le copolymère peut varier de 0 à 90%, en particulier de 40 à 80% en nombre de groupes carboxyliques.

Ces groupes carboxyliques peuvent être sous forme d'acide non dissocié. Le plus souvent, ils seront cependant au moins partiellement ou totalement neutralisés, estérifiés ou amidifiés.

Le copolymère selon l'invention présente généralement une masse molaire moyenne comprise entre 1000 et 220 000 (Mw), de préférence entre 10 000 et 110 000 (Mw) tel que déterminé par SEC (« size exclusion chromatography », chromatographie liquide par exclusion moléculaire) en équivalent de polyoxyéthylène étalon.

L'indice de polymolécularité Ip est de préférence compris entre 1 et 5, de préférence entre 1,5 et 3.

### [Procédé de préparation des copolymères selon l'invention]

Selon un deuxième aspect, l'invention propose un procédé de préparation du copolymère greffé par des groupes gem-bisphophonés décrit ci-dessus.

Plusieurs types de réactions peuvent convenir pour la préparation du copolymère selon l'invention.

Notamment, il peut être préparé par copolymérisation de monomères appropriés ou par modification d'un polymère par greffage de groupes latéraux. Ce dernier procédé est aussi appelé post-greffage.

Ainsi, selon un mode de réalisation, le copolymère décrit est préparé par copolymérisation, en masse ou en solution, en présence d'un catalyseur approprié, de monomères susceptibles de polymériser portant respectivement les groupes recherchés. On peut ainsi polymériser un mélange comprenant un monomère portant un groupe gem-bisphosphonate, un monomère portant un groupe carboxylique et éventuellement un monomère portant un groupe polyoxyalkylé.

Un monomère approprié portant le groupe gem-bisphosphonate est notamment un (méth)acrylate ou (méth)acrylamide porteur d'un motif gem-bisphosphonate, obtenu par exemple par réaction d'un composé de formule (I) avec le chlorure de (méth)acryloyle ou l'anhydride (méth)acrylique.

Un monomère portant un groupe polyoxyalkylé approprié est notamment le (méth)acrylate ou (méth)acryamide de méthoxypolyéthylène glycol.

Le monomère portant un groupe carboxylique peut être en particulier choisi parmi les acides carboxyliques insaturés tels que l'acide acrylique, l'acide méthacrylique, l'acide maléique, l'acide fumarique, l'acide itaconique et leurs dérivés substitués ou encore un composé susceptible de générer des fonctions carboxyliques insaturés in situ, comme l'anhydride maléique.

Le copolymère selon l'invention peut alors être obtenu par copolymérisation de ces monomères, notamment par voie radiculaire dans les conditions habituelles en présence d'un amorceur approprié.

Selon un autre mode de réalisation, le polymère est préparé par un procédé dit de « post-greffage ». Dans ce procédé, un polymère comprenant une chaîne hydrocarbonée et des groupes latéraux carboxyliques et éventuellement des groupes latéraux polyalkoxylés est modifié par greffage de groupes gem-bisphosphonés.

Le greffage est réalisé de préférence par réaction des groupes carboxyliques avec un composé gem-bisphosphoné portant une fonction réactive, notamment un groupe alcool ou amine, primaire ou secondaire.

Aussi, selon un deuxième aspect, l'invention vise un procédé de préparation du copolymère décrit ci-dessus comprenant les étapes consistant à :
(i) polymériser un monomère portant un groupe carboxylique, éventuellement en présence d'un monomère portant un groupe polyoxyalkylé; et
(ii) greffer le polymère obtenu avec un composé réactif gem-bisphosphoné.

En variante, on peut polymériser le monomère carboxylique puis estérifier au degré souhaité les groupes carboxyliques par des composés polyoxyalkylés, comme cela est décrit par exemple de la demande de brevet FR 2 776 285, avant de greffer le produit obtenu avec un composé réactif gem-bisphosphoné.

De préférence, le composé réactif gem-bisphosphoné est un alcool ou une amine gem-bisphosphoné, les amines étant préférées en raison de leur meilleure réactivité à basse température.

Avantageusement, le composé réactif gem-bisphosphoné est de formule (I) suivante : 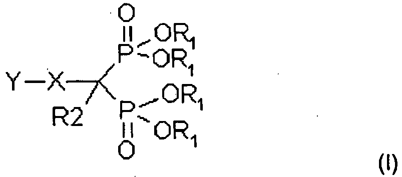 dans laquelle :
Y est un groupe fonctionnel susceptible de réagir avec les fonctions carboxyliques du polymère, notamment un groupe hydroxyle, amine primaire ou secondaire, isocyanate ou thiol;
X un groupe espaceur, en particulier un groupe alkylène en C₁ à C₂₀ éventuellement substitué ou un enchaînement de groupes de formule -(QO)ₙ- dans laquelle Q représente un groupe alkylène de 2 à 4 atomes de carbone ou un mélange de ces groupes d'alkylène, de préférence, X est un groupe alkylène en C₁ à C₆, n étant un nombre entier variant de 1 à 500 ;
R1 est, indépendamment les uns des autres, un groupe monovalent, notamment hydrogène, un cation, notamment un cation alcalin, alcalino-terreux ou ammonium ou un groupement alkyle de C₁ à C₆ et de préférence de C₁ à C₃ ; et
R2 est un groupe monovalent, notamment hydrogène, hydroxyle ou alkyle en C₁ à C₁₀, de préférence, R2 est un groupe hydroxyle.

Le polymère à greffer ne comportera pas nécessairement des groupes polyoxyalkylés dès lors que le composé gem-bisphosphoné en comporte.

La réaction de greffage peut avantageusement être réalisée à température supérieure à 120°C, de préférence entre 150 et 200°C, et en particulier entre 170 et 180°C. L'eau formée par la réaction est alors éliminée du mélange réactionnel par évaporation, et le produit réactionnel est récupéré sous forme de résidu sec.

Les groupes carboxyliques ou phosphoniques présents dans le produit réactionnel peuvent être ensuite totalement ou partiellement neutralisés.

### [L'adjuvant]

Selon un troisième aspect, l'invention propose un adjuvant pour suspensions de particules minérales comprenant le copolymère décrit.

Afin d'en faciliter la mise en oeuvre et le dosage, l'adjuvant peut être présenté sous forme de solution dans un solvant approprié.

De préférence, le solvant approprié comprend ou est constitué d'eau. Dans certains cas, l'utilisation d'un autre solvant, tel qu'un alcool ou d'un glycol peut être envisagée en complément ou en alternative, par exemple pour faciliter la solubilisation.

La concentration de l'adjuvant en polymère dépend principalement de l'application envisagée. Généralement, l'adjuvant comprend de 1 à 50, de préférence 10 à 30% en poids de polymère par rapport au poids total.

En variante, l'adjuvant peut également être présenté sous forme sèche, notamment en poudre.

La formulation de l'adjuvant peut par ailleurs comprendre d'autres additifs habituels, tels que des agents anti-mousse, des accélérateurs, des retardateurs, des agents hydrofuges, des agents désaérants, d'autres dispersants, des entraîneurs d'air ou des stabilisants d'agents anti-mousse.

### [Utilisation des copolymères selon l'invention]

Selon un quatrième aspect, l'invention propose l'utilisation de l'adjuvant pour la fluidification de suspensions de particules minérales et pour le maintien de l'ouvrabilité de liants hydrauliques.

A titre de liants hydrauliques, on peut mentionner en particulier les compositions de ciment, et notamment les bétons, notamment les bétons préfabriqués et les bétons prêts à l'emploi. Ces bétons peuvent être destinés notamment au bâtiment et au génie civil.

La quantité d'adjuvant à ajouter à la suspension de particules minérales dépend bien entendu des propriétés recherchées et de l'application envisagée. On observe que pour les compositions préférées de l'invention, ce dosage varie en revanche peu avec la nature du milieu, et en particulier peu de la composition chimique des ciments utilisés.

Généralement, pour une composition de ciment, un dosage en adjuvant de 0,01 à 2%, de préférence de 0,05 à 1% et tout particulièrement de 0,1 à 0,5% en poids en polymère par rapport au poids du ciment est approprié pour la plupart des applications standards.

A titre indicatif, un dosage efficace en adjuvant pour la préparation d'une composition de béton prêt à l'emploi est de 0,7 à 1,5% d'une formulation à 20% en poids d'extrait sec par rapport au poids de ciment.

Le mécanisme d'action des polymères décrits n'est pas tout à fait compris, étant entendu que celui des super-plastifiants dans les ciments n'est pas encore complètement élucidé de manière générale.

On suppose toutefois que l'effet fluidifiant des super-plastifiants résulte principalement de forces de répulsion mises en jeu entre les copolymères adsorbés sur la surface des grains.

La présence conjuguée, dans les copolymères à groupes gem-bisphosphonés selon l'invention, de longues chaînes polyoxyalkylées faisant effet de dispersion, et de groupes phosphonate ayant une forte capacité de complexation et un pouvoir d'adsorption exceptionnel vis-à-vis de cations di-ou trivalents tels que le calcium ou l'aluminium, est supposée être la raison pour les propriétés particulières à titre d'adjuvant.

Par ailleurs, il a été observé, de façon surprenante, que les copolymères gem-bisphosphonés selon l'invention présentent un excellent compromis pouvoir réducteur d'eau - maintien de rhéologie sur une grande plage de concentration en chaînes polyoxyalkylées.

Il a été constaté en outre que les copolymères selon l'invention présentent une faible sensibilité aux sulfates alcalins présents notamment dans les ciments.

En effet, les essais conduits ont démontré que la fonctionnalisation des PCP par des synthons gem-bisphosphoniques permet de perturber l'adsorption des ions sulfate à la surface des particules de ciment et donc de favoriser celle du copolymère fonctionnalisé et de ce fait son action dispersante.

Cette adsorption diminue fortement dans le cas de teneurs en ions sulfates élevées par suite de la compétition d'adsorption, sur la surface des grains de ciment, entre les ions sulfates et le copolymère. Ainsi, des teneurs élevées en sulfates solubles conduisent généralement à une faible réduction d'eau, sans doute due à une adsorption initiale plus faible du copolymère. Toutefois, on observe le plus souvent une meilleure ouvrabilité des compositions, que l'on suppose être liée à une meilleure disponibilité du copolymère dans le liquide interstitiel lequel permet de prolonger l'effet dispersant.

Par ailleurs, le copolymère selon l'invention présente avantageusement une faible sensibilité aux argiles souvent présentes dans les sables et fillers calcaires constitutifs de suspensions de particules minérales.

En effet, la présence d'argiles dans les compositions hydrauliques affecte l'efficacité des super-plastifiants du fait de leur adsorption sur la surface de ces argiles et de l'intercalation de leurs greffons polyéthoxylés dans les espaces inter-foliaires de ces argiles. La diminution du maintien de fluidité requiert alors d'augmenter le dosage en adjuvant, ce qui à son tour engendre des coûts et au-delà peut entraîner une dégradation d'autres propriétés telles que la résistance en compression et la durabilité du matériau et qui peut par ailleurs conduire à l'apparition de fissurations.

Il est supposé que cet effet avantageux est lié au fait que la présence de groupements gem-bisphosphoniques dans les copolymères selon l'invention augmente leur affinité pour la surface des grains de ciment aux dépens de celle des particules d'argile. Ce phénomène peut être dû à l'apport de charges anioniques supplémentaires, lié à la substitution d'un groupe carboxylate par 4 fonctions phosphonate, qui rendent plus difficile l'approche vers les argiles et donc l'adsorption à leur surface.

Les copolymères greffés obtenus comme décrit ci-dessus sont particulièrement intéressants à titre de plastifiants de suspensions de particules minérales, notamment de compositions de ciment et de formulations de plâtre.

En effet, ils présentent :
- un pouvoir réducteur d'eau élevé,
- une insensibilité aux sulfates alcalins des ciments,
- une diminution de la sensibilité aux argiles présentes dans les sables,
- un très bon pouvoir fluidifiant de compositions hydraulique avec un très bon maintien de fluidité.

### [Compositions de particules minérales]

Enfin, selon un dernier aspect, l'invention vise une composition de particules minérales comprenant le copolymère selon l'invention.

Les compositions ainsi adjuvantées présentent une ouvrabilité prolongée avec un faible dosage, y compris en présence de teneurs en sulfates alcalins et/ou en argiles élevées. Elles sont de ce fait intéressantes pour un large éventail d'applications, en particulier les bétons prêts à l'emploi, les bétons autoplaçants, les bétons à haute ou très haute performance (BHP et BTHP) ou les bétons de préfabrication.

L'invention sera mieux expliqué au regard des exemples qui suivent, donnés à titre non limitatif.

### EXEMPLES

### A. Préparation du synthon bis-phosphoné

### EXEMPLE 1

### Préparation d'acide 1-hydroxyéthylène-1,1-bisphosphonique (HEDP)

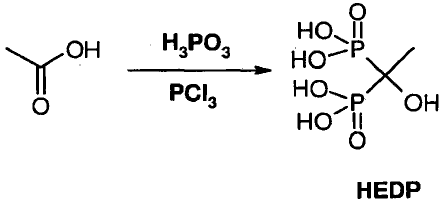

Dans un ballon tricol de 1000 mL muni d'une agitation magnétique, surmonté d'un réfrigérant et d'un inertage à l'azote et placé dans un bain d'huile thermostaté et relié à une pompe à vide, on charge 60g (1 mole) d'acide acétique, 123g (1,5 moles) d'acide phosphoreux et 500 mL de chlorobenzène anhydre. Le mélange est porté à une température de 100°C sous agitation. On observe la formation d'une solution homogène. On introduit alors dans le milieu lentement 206g (1,5 mole) de trichlorure de phosphore (PCl₃). Le mélange réactionnel est maintenu à 100°C pendant trois heures encore puis laissé refroidir à température ambiante. Le résidu solide obtenu est lavé au chlorobenzène puis dissout dans 500 mL d'eau et porté à ébullition sous reflux pendant 1 heure. Après refroidissement, la solution est traitée au carbone actif puis filtrée. L'acide brut précipite par addition d'un excès de méthanol chaud et après séparation, le produit est recristallisé à partir d'un litre d'eau à 100°C.
Le rendement est de 87% en acide 1-hydroxy éthylène-1,1-bisphosphonique. Le produit de réaction a été caractérisé par RMN ³¹P (CDCl₃), RMN ¹H (CDCl₃) et RMN ¹³C.

### EXEMPLE 2

### Préparation d'acide 1-hydroxy-3-aminopropylène-1,1-bisphosphonique (AHP)

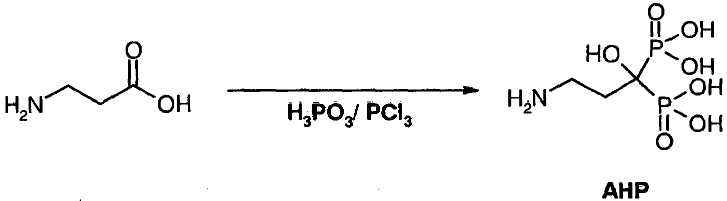

Dans un ballon tricol de 1000 mL muni d'une agitation magnétique, surmonté d'un réfrigérant et d'un inertage à l'azote et placé dans un bain d'huile thermostaté et relié à une pompe à vide, on charge 91g (1 mole) d'acide 3-aminopropionique, 123g (1,5 moles) d'acide phosphoreux et 500 mL de chlorobenzène anhydre. Le mélange est porté à une température de 100°C sous agitation. On observe la formation d'une solution homogène. On introduit alors dans le milieu lentement 206g (1,5 mole) de trichlorure de phosphore (PCl₃). Le mélange réactionnel est maintenu à 100°C pendant trois heures encore puis laissé refroidir à température ambiante. Le résidu solide obtenu est lavé au chlorobenzène puis dissout dans 500 mL d'eau et porté à ébullition sous reflux pendant 1 heure. Après refroidissement, la solution est traitée au carbone actif puis filtrée. L'acide brut précipite par addition d'un excès de méthanol chaud et après séparation, le produit est recristallisé à partir d'un litre d'eau à 100°C.
Le rendement est de 82% en acide 1-hydroxy-3-amino-propylène-1,1-bisphosphonique. Le produit de réaction a été caractérisé par RMN ³¹P (CDCl₃), RMN ¹H (CDCl₃) et RMN ¹³C.

### EXEMPLE 3

### Préparation d'acide 1-hydroxy-4-amino-butylène-1,1-bisphosphonique (BHP)

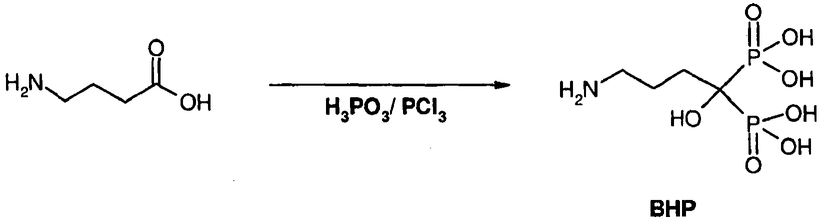

Dans un ballon tricol de 1000 mL muni d'une agitation magnétique, surmonté d'un réfrigérant et d'un inertage à l'azote et placé dans un bain d'huile thermostaté et relié à une pompe à vide, on charge 105g (1 mole) d'acide 4-aminobutyrique, 123g (1,5 moles) d'acide phosphoreux et 500 mL de chlorobenzène anhydre. Le mélange est porté à une température de 100°C sous agitation. On observe la formation d'une solution homogène. On introduit alors dans le milieu lentement 206g (1,5 mole) de trichlorure de phosphore (PCl₃). Le mélange réactionnel est maintenu à 100°C pendant trois heures encore puis laissé refroidir à température ambiante. Le résidu solide obtenu est lavé au chlorobenzène puis dissout dans 500 mL d'eau et porté à ébullition sous reflux pendant 1 heure. Après refroidissement, la solution est traitée au carbone actif puis filtrée. L'acide brut précipite par addition d'un excès de méthanol chaud et après séparation, le produit est recristallisé à partir d'un litre d'eau à 100°C.
Le rendement est de 77% en acide 1-hydroxy-4-amino-butylène-1,1-bisphosphonique. Le produit de réaction a été caractérisé par RMN ³¹P (CDCl₃), RMN ¹H (CDCl₃) et RMN ¹³C.

### B. Modification d'un polymère par greffage du synthon gem-bisphosphoné

Après l'obtention d'un copolymère référence non fonctionnalisé phosphore (exemple 4) sont présentés les essais de greffage du synthon phosphoné réalisés avec l'HEDP afin de déterminer les meilleures conditions opératoires (exemples 5A-5C). Ces conditions de greffage ont ensuite été utilisés pour greffer des synthons HEDP, AHP et BHP à différents taux (exemples 6A-6C, 7A-7C et 8A-8C).

### EXEMPLE 4

### Préparation d'un copolymère polycarboxylique polyalkoxylé référence

Dans un ballon bicol de 500 mL muni d'une agitation magnétique, surmonté d'un réfrigérant et d'un inertage à l'azote et placé dans un bain d'huile thermostaté, on charge 73.57g (323.4mmoles) d'acide polyméthacrylique (TP 941, commercialisé par la Société COATEX, indice d'acidité 181,1mg KOH/g) puis on introduit 0.48g (5.95mmoles) de soude (solution aqueuse de NaOH à 50% en poids). On procède alors au chargement de 34.35g (46mmoles) de méthoxypolyéthylèneglycol (MPEG) de masse molaire 750 g/mole puis de 91.60g (46 mmoles) de méthoxypolyéthylèneglycol (MPEG) de masse molaire 2000 g/mole et l'on porte la température du milieu réactionnel à 175°C. Lorsque la température du milieu réactionnel atteint 100°C, on met le réacteur sous vide partiel (<20 mbar).

On prend comme T0, temps de début de réaction, le moment où le milieu réactionnel devient homogène. On laisse la réaction d'estérification se poursuivre pendant 7 h à 175°C avant de laisser le milieu réactionnel revenir à température ambiante.

On obtient une base anhydre présentant une masse de copolymère peigne de 147,5 g soit 73,8% par rapport au mélange réactionnel initial.

### EXEMPLES 5A - 5C

### Optimisation des conditions de greffage du synthon phosphoné

Afin d'évaluer l'effet des conditions de réaction sur le greffage de l'acide polycarboxylique, on a répété l'exemple 4 en variant le moment d'introduction du réactif gem-bisphosphoné, **HEDP,** préparé dans les exemples précédents.

Dans l'exemple 4, la réaction est réalisée sans addition de synthon gem-bisphosphoné afin de servir de référence. Dans les exemples 5A, le synthon gem-bisphosphoné **(HEDP)** est ajouté au début de la réaction, lorsque le milieu réactionnel devient homogène (T0) et 4 heures après ce moment, respectivement.
Les mélanges réactionnels issus de ces réactions sont analysés en termes d'indice d'acidité et de teneur en MPEG résiduelle par GPC selon le protocole suivant.

On injecte dans un premier temps des étalons de MPEG à des concentrations croissantes puis on détermine les aires correspondantes. La mesure de l'aire du pic de MPEG de l'échantillon à analyser permet d'accéder au taux de MPEG résiduel. Les injections sont faites à 40°C, les colonnes utilisées sont l'Aquagel Guard OH 8µm (commercialisé par Agilent Technologies) disposée en série avec 2 colonnes Aquagel OH30 (également commercialisé par Agilent Technologies).

**Tableau 1 : Conditions des réactions selon les exemples 5A-5C**

| **EXEMPLE** | **Mélange réactionnel** | **HEDP** | | **Indice d'acidité la** | **Polyox résiduel** |
|---|---|---|---|---|---|
| | | Quantité [% molaire] | Introduit | | |
| **4** (EPB 662054) | Acide méthacrylique MPEG | - | N/A | 20,384 | 3,87% |
| **5A** (EPB 662055) | Acide méthacrylique MPEG | 4 | au départ | 36,741 | 29,84% |
| **5B** (EPB 662056) | Acide méthacrylique MPEG | 4 | à T0 | 33,424 | 27,88% |
| **5C** (EPB 662058) | Acide méthacrylique MPEG | 4 | à T0+4h | 33,769 | 3,83% |

Les résultats sont résumés dans le tableau 1 ci-dessus.

On constate que l'introduction simultanée du synthon gem-bisphosphoné avec les composés polyalkoxylés perturbe la réaction d'estérification.

Une introduction différée dans le milieu réactionnel en revanche, par exemple au bout de 4 heures de réaction, permet de retrouver un taux de greffage des MPEG équivalent à celui de la réaction de référence sans synthon phosphoné.

Ce sont ces conditions opératoires qui ont été retenues pour la suite de l'étude.

### EXEMPLE 6A-6C

### Préparation de copolymères de type PCP greffés de HEDP

Dans un ballon bicol de 500 mL muni d'une agitation magnétique, surmonté d'un réfrigérant et d'un inertage à l'azote et placé dans un bain d'huile thermostaté, on charge 73.57g (323.4mmoles) d'acide polyméthacrylique (TP 941, commercialisé par la Société COATEX, indice d'acidité 181,1mg KOH/g) puis on introduit 0.48g (5.95mmoles) de soude (solution aqueuse de NaOH à 50% en poids). On procède alors au chargement de 34.35g (46mmoles) de méthoxypolyéthylèneglycol (MPEG) de masse molaire 750 g/mole puis de 91.60g (46 mmoles) de méthoxypolyéthylèneglycol (MPEG) de masse molaire 2000 g/mole et l'on porte la température du milieu réactionnel à 175°C. Lorsque la température du milieu réactionnel atteint 100°C, on met le réacteur sous vide partiel (<20 mbar).

On prend comme T0, temps de début de réaction, le moment où le milieu réactionnel devient homogène. Après 4 h de cuisson à 175°C, on introduit très lentement 4,11 g de synthon bis-phosphoné selon l'exemple 1 et on laisse la réaction d'estérification se poursuivre encore pendant 3 h à 175°C avant de laisser le milieu réactionnel revenir à température ambiante.

On obtient une base anhydre présentant une masse de copolymère greffé de 143,3 g soit 71,7% par rapport au mélange réactionnel initial.

La solution de copolymère porteur de fonctions carboxyliques, de greffons polyéthers et de motifs gem-bisphosphoniques obtenue est ensuite formulée par ajout de 0,5% en poids d'amine oléique à 2 moles d'oxyde d'éthylène (commercialisée sous la dénomination NORAMOX O₂ par CECA) et de 1,2% en poids de tributylphosphate (antimousse).

Enfin, le produit est dilué avec de l'eau pour obtenir un extrait sec de 20% et on le neutralise avec de l'hydroxyde de sodium à pH 7.

Le dispersant ainsi préparé est prêt à l'emploi.

### EXEMPLE 7A-C

### Préparation de copolymères de type PCP greffés de AHP

On répète l'exemple 6 mais en remplaçant toutefois le synthon gem-bisphosphonique HEDP par la quantité de synthon gem-bisphosphonique AHP préparé à l'exemple 2 indiquée dans le tableau 2 ci-dessous.

On obtient une base anhydre présentant une masse de copolymère greffé de 144,5 g soit 72,6% par rapport au mélange réactionnel initial.

La solution de copolymère porteur de fonctions carboxyliques, de greffons polyéthers et de motifs gem-bisphosphoniques obtenue est ensuite formulée par ajout de 0,5% en poids d'amine oléique à 2 moles d'oxyde d'éthylène (commercialisée sous la dénomination NORAMOX O₂ par CECA) et de 1,2% en poids de tributylphosphate (antimousse).

Enfin, le produit est dilué avec de l'eau pour obtenir un extrait sec de 20% et on le neutralise avec de l'hydroxyde de sodium à pH 7.

Le dispersant ainsi préparé est prêt à l'emploi.

**Tableau 2 : Réactifs pour la préparation des copolymères des exemples 6 - 9**

| **EX.** | **Copolymère de type PCP** | **Synthon gem-bisphosphonique** | | |
|---|---|---|---|---|
| | | Type | Proportion [% molaire] | Masse [g] |
| 6A | EPB 762.013 | HEDP | 2 | 145,5 |
| 6B | EPB 762.014 | HEDP | 4 | 143,3 |
| 6C | EPB 762.015 | HEDP | 6 | 141,1 |
| 7A | EPB 762.022 | AHP | 2 | 146,1 |
| 7B | EPB 762.023 | AHP | 4 | 144,5 |
| 7C | EPB 762.024 | AHP | 6 | 142,9 |
| 8A | EPB 762.034 | BHP | 2 | 146,1 |
| 8B | EPB 762.035 | BHP | 4 | 144,6 |
| 8C | EPB 762.036 | BHP | 6 | 142,9 |
| 9A | EPB 762.013 + EPB 709028 | HEDP | 2 | ND |
| 9B | EPB 762.014 + + EPB 709028 | HEDP | 4 | ND |
| 9C | EPB 762.015 + + EPB 709028 | HEDP | 6 | ND |

### EXEMPLE 8A-C

### Préparation de copolymères de type PCP greffés de BHP

On répète l'exemple 6 mais en remplaçant toutefois le synthon gem-bisphosphonique HEDP par la quantité de synthon gem-bisphosphonique BHP préparé à l'exemple 3 indiquée dans le tableau 2 ci-dessus.

On obtient une base anhydre présentant une masse de copolymère greffé de 144,6 g soit 72,73% par rapport au mélange réactionnel initial.

La solution de copolymère porteur de fonctions carboxyliques, de greffons polyéthers et de motifs gem-bisphosphoniques obtenue est ensuite formulée par ajout de 0,5% en poids d'amine oléique à 2 moles d'oxyde d'éthylène (commercialisée sous la dénomination NORAMOX O₂ par CECA) et de 1,2% en poids de tributylphosphate (antimousse).

Enfin, le produit est dilué avec de l'eau pour obtenir un extrait sec de 20% et on le neutralise avec de l'hydroxyde de sodium à pH 7.

Le dispersant ainsi préparé est prêt à l'emploi.

### EXEMPLE 9A-C

### Préparation de copolymère de type PCP greffés de HEDP

On répète l'exemple 6 mais en ajoutant toutefois dans le copolymère final une proportion de copolymère de type EPB 729.028 obtenu dans les conditions opératoires de l'exemple 4 mais ne contenant que des fonctions carboxyliques et du méthoxypolyéthylèneglycol de masse molaire 2000 g/mole.

La solution du mélange de copolymères porteurs de fonctions carboxyliques, de greffons polyéthers et de motifs gem-bisphosphoniques obtenue est ensuite formulée par ajout de 0,5% en poids d'amine oléique à 2 moles d'oxyde d'éthylène (commercialisée sous la dénomination NORAMOX O₂ par CECA) et de 1,2% en poids de tributylphosphate (antimousse).

Enfin, le produit est dilué avec de l'eau pour obtenir un extrait sec de 20% et on le neutralise avec de l'hydroxyde de sodium à pH 7.

Le dispersant ainsi préparé est prêt à l'emploi.

### C. Evaluation des propriétés applicatives

### 1. Pouvoir réducteur d'eau

Afin d'évaluer le pouvoir réducteur d'eau des copolymères selon l'invention, des mortiers ont été formulés en ajoutant les copolymères préparés aux exemples 6 à 9 à titre de plastifiant.

La composition du mortier préparé est détaillée dans le tableau 3 ci-dessous. Le copolymère non greffé (exemple 4 EPB 662054 et mélange EPB 762.014 + EPB 729.028, respectivement) sert de référence (REF).

Le mortier est préparé selon la procédure suivante :
On a introduit dans le bol d'un malaxeur PERRIER les deux sables, normalisé et FULCHIRON. Après malaxage des sables pendant 30 secondes à une vitesse d'environ 140 tr/mn, on ajoute, en l'espace de 15 secondes, l'eau de pré-mouillage qui représente 1/3 de l'eau totale à introduire. Le mélange est poursuivi pendant 15 secondes avant de laisser reposer la masse pendant 4 minutes. Ensuite on introduit le ciment et le filler calcaire (origine ERBRAY fourni par la Société MEAC) puis le mélange se poursuit pendant 1 minute avant d'ajouter le reste de l'eau de gâchage ainsi que la totalité de l'adjuvant en l'espace de 30 secondes. Le malaxeur est ensuite arrêté quelques instants pour racler les bords du bol de malaxage afin d'avoir une masse bien homogène puis le mélange est poursuivi pendant encore 1 minute à vitesse rapide de 280 t/mn.

**Tableau 3 : Composition du mortier utilisé pour évaluer l'ouvrabilité**

| **Composante** | **Masse** [g] |
|---|---|
| CEMI (ciment Le Havre 01/10) | 624.9 |
| Filler ERBLAY | 412.1 |
| Sable AFNOR | 1350 |
| Sable FULCHIRON | 587.7 |
| Eau totale | 375.1 |

L'ouvrabilité des mortiers formulés avec les copolymères selon l'invention a été évaluée par mesure du diamètre d'étalement (slump flow) selon la procédure décrite ci-après.

On remplit un moulé sans fond de forme tronconique, de reproduction à l'échelle 0,5 du cône d'Abrams (voir norme NF 18-451, 1981); pour effectuer l'étalement, on soulève le cône perpendiculairement à la plaque en faisant un quart de tour. L'étalement est mesuré à 5, 30, 60 et 90 minutes selon 2 diamètres à 90° avec un mètre à ruban. Le résultat de la mesure d'étalement est la moyenne des 2 valeurs à +/- 1 mm. Les essais sont réalisés à 20°C.

Le dosage du copolymère greffé est déterminé de manière à atteindre un étalement cible compris entre 310 et 330 mm. Sauf indication contraire, le dosage est exprimé en % en poids par rapport au poids du liant total (filler + ciment)).

Les résultats obtenus pour les mortiers formulés avec les copolymères greffés HEDP de l'exemple 6 sont rassemblés dans le tableau 4 ci-dessous.

A l'examen des résultats, on constate que le greffage de 2 ou 4% d'HEDP permet d'abaisser sensiblement le dosage (passage de 0,60% à 0,35%) pour un étalement initial équivalent.

**Tableau 4 : Etalement d'un mortier adjuvanté de copolymères de l'exemple 6**

| **EX.** | **Greffage** [% molaire] | **Dosage** [%] | **Etalement T** [min] | | | | | **Perte de fluidité** [%] |
|---|---|---|---|---|---|---|---|---|
| | | | 5 | 30 | 60 | 90 | 120 | |
| REF | - | 0.5 | 335 | 325 | 300 | 280 | 245 | 26.87 |
| REF | 4% HEDP sans greffage | 0.5 | 315 | 310 | 290 | 270 | 245 | 22.22 |
| 6A | 2% HEDP | 0.35 | 320 | 245 | 190 | 165 | 125 | 60.94 |
| 6B | 4% HEDP | 0.35 | 340 | 275 | 220 | 195 | 155 | 54.41 |
| 6C | 6% HEDP | 0.35 | 340 | 225 | 195 | 155 | 125 | 63.24 |

On vérifie par ailleurs que le simple ajout à la formulation témoin de 4% d'HEDP, (EPB 760.020) qui n'est alors pas greffé au copolymère ne permet pas de modifier le pouvoir réducteur d'eau du copolymère greffé témoin.

L'amélioration du pouvoir réducteur d'eau des copolymères greffés bis-phosphoniques peut s'expliquer par une plus grande affinité pour la surface des grains de ciment.

Les résultats obtenus pour les mortiers formulés avec les copolymères greffés AHP préparés à l'exemple 7 comme décrit précédemment sont rassemblés dans le tableau 5 ci-dessous.

**Tableau 5 : Etalement d'un mortier adjuvanté de copolymères de l'exemple 7**

| **EX.** | **Greffage** [% molaire] | **Dosage** [%] | **Etalement T** [min] | | | | | **Perte de fluidité** [%] |
|---|---|---|---|---|---|---|---|---|
| | | | 5 | 30 | 60 | 90 | 120 | |
| REF | - | 0.5 | 335 | 335 | 290 | 270 | 245 | 26.87 |
| REF | - | 0.5 | 340 | 340 | 320 | 310 | 280 | 17.65 |
| 7A | 2% AHP | 0.35 | 335 | 245 | 215 | 170 | 155 | 53.73 |
| 7B | 4% AHP | 0.35 | 320 | 225 | 175 | 140 | 120 | 62.50 |
| 7C | 6% AHP | 0.35 | 340 | 235 | 200 | 170 | 140 | 58.82 |

On constate que le greffage de 2, 4 ou 6% d'AHP permet également d'abaisser le dosage de superplastifiant (passage de 0,50% à 0,35%) pour un étalement initial équivalent.

Les résultats obtenus pour les mortiers formulés avec les copolymères greffés BHP préparés à l'exemple 8 comme décrit précédemment sont rassemblés dans le tableau 6 ci-dessous.

**Tableau 6 : Etalement d'un mortier adjuvanté de copolymères de l'exemple 8**

| **EX.** | **Greffage [%** molaire] | **Dosage** [%] | **Etalement T** [min] | | | | | **Perte de fluidité** [%] |
|---|---|---|---|---|---|---|---|---|
| | | | 5 | 30 | 60 | 90 | 120 | |
| REF | - | 0.5 | 330 | 330 | 315 | 260 | 245 | 25.76 |
| REF | - | 0.4 | 330 | 330 | 270 | 225 | 175 | 46.97 |
| 8A | 2% BHP | 0.4 | 330 | 270 | 245 | 190 | 160 | 51.52 |
| 8B | 4% BHP | 0.4 | 340 | 290 | 265 | 200 | 165 | 51.47 |
| 8C | 6% BHP | 0.35 | 320 | 200 | 160 | 125 | 120 | 62.50 |

Les résultats obtenus montrent que le greffage de 2 ou 4% de BHP permet aussi d'abaisser le dosage (passage de 0,5% à 0,4%) pour un étalement initial équivalent.

Les résultats présentés ci-dessus permettent de conclure que l'introduction de motifs bis-phosphoniques sur un squelette PCP modifie le pouvoir réducteur d'eau des copolymères.

Sans vouloir être lié par une théorie quelconque, cette observation peut être expliquée par une affinité accrue des copolymères greffés pour la surface des particules de ciment.

### 2. Amélioration du pouvoir réducteur d'eau avec maintien de fluidité

Par ailleurs, il a été observé de façon surprenante que ces copolymères à groupes gem-bisphosphonates permettent d'améliorer significativement le pouvoir réducteur d'eau sans dégradation du maintien de rhéologie sur une large plage de concentration en chaînes polyoxyalkylées dans le copolymère, exprimée par le taux d'ester dans le tableau 8.

**Tableau 7 : Composition du mortier utilisé pour évaluer l'ouvrabilité**

| **Composition mortier** | **Lot** | **Gâchée [g]** |
|---|---|---|
| CEM I 52,5 R SPLC | 19/05/2010 | 800 |
| Filler DURCAL 10 | ND | 120 |
| Sable AFNOR | ND | 1350 |
| EAU Totale | ND | 300 |

**Tableau 8 : Etalement d'un mortier adjuvanté de copolymères de l'exemple 9**

| **SPLC 52,5 R** | **Dosage commer cial** [%] | **Dosage sec** [%] | **Etalement [mm]** | | | **Taux MPEG 2000** | **Taux HEDP** | **Taux d'ester global** |
|---|---|---|---|---|---|---|---|---|
| | | | 5 | 3 | 60 | | | |
| EPB 819019 | 1,20 | 0,30 | 315 | 315 | 310 | 25 | 0 | 25 |
| EPB 819012 | 1,00 | 0,25 | 310 | 320 | 310 | 25 | 4 | 29 |
| EPB 819027 | 0,85 | 0,21 | 300 | 295 | 295 | 25 | 8 | 33 |
| EPB 819035 | 0,50 | 0,13 | 305 | 275 | 290 | 25 | 12 | 37 |
| EPB 819036 | 0,50 | 0,13 | 290 | 275 | 285 | 25 | 16 | 41 |

On constate à la lecture du tableau 8 ci-dessus que l'utilisation d'un additif comportant un copolymère polycarboxylique polyalkoxylé greffé par 4% et 8% d'HEDP dans une formulation cimentaire permet une réduction du dosage en superplastifiant avec un maintien de fluidité au cours du temps.

### 2. Sensibilité aux sulfates alcalins

Afin d'évaluer l'impact de la présence de sulfates alcalins sur l'efficacité des copolymères selon l'invention à titre de superplastifiant, on a procédé à des essais avec des mortiers à teneur en sulfates variable.

La teneur en sulfates alcalins des mortiers a été modifiée par ajout de sulfate de potassium en poudre au ciment (0,3 et 0,6% en poids par rapport au poids du ciment en sec/sec). Le mortier a ensuite été préparé selon la formulation indiquée dans le tableau 9 ci-dessous, en ajoutant à l'eau de gâchage le dosage indiqué de copolymère de référence.

L'étalement de ces mortiers a été évalué comme décrit ci-dessus.

**Tableau 9 : Composition du mortier utilisé pour évaluer la sensibilité aux sulfates**

| **Composante** | **Masse** [g] |
|---|---|
| CEM I (ciment Le Havre 01/10) | 624.9 |
| Filler ERBLAY | 412.1 |
| Sable AFNOR | 1350 |
| Sable FULCHIRON | 587.7 |
| Eau totale | 375.1 |

Les résultats obtenus sont rassemblés dans les tableaux 10 et 11 ci-dessous, respectivement. La concentration en sulfates total indiquée tient compte du taux d'alcalins initialement présent dans le ciment Le Havre (LH), évalué à 0,25% en poids (sec/sec).

Il est observé que le dosage en superplastifiant de référence nécessaire pour obtenir un étalement ciblé triple presque en présence de 0,6% en poids supplémentaire de sulfate alcalin.

**Tableau 10 : Effet des sulfates - superplastifiant de référence**

| **EX.** | **Greffage** [% molaire] | **K₂SO₄ ajouté [%** en poids du ciment] | **Sulfates alcalins total** [% en poids] | **Dosage [%]** | **Etalement T** [min] | | | | |
|---|---|---|---|---|---|---|---|---|---|
| | | | | | 5 | 30 | 60 | 90 | 120 |
| REF | - | - | 0.25 | 0.5 | 320 | 295 | 240 | 180 | 140 |
| REF | - | 0.3 | 0.55 | 0.8 | 310 | 305 | 270 | 230 | 200 |
| REF | - | 0.6 | 0.85 | 1.3 | 325 | 320 | 315 | 300 | 280 |

Les essais ont ensuite été répétés en utilisant le copolymère de l'exemple 6B (greffé par 4% d'HEDP) dans la formulation de mortier. Les résultats obtenus sont résumés dans le tableau 11 ci-dessous.

**Tableau 11 : Effet des sulfates - copolymère de l'exemple 6, étalement constant**

| **EX.** | **Greffage** [% molaire] | **K₂SO₄ ajouté** [% en poids] | **Dosage** [%] | **Etalement T** [min] | | | | |
|---|---|---|---|---|---|---|---|---|
| | | | | 5 | 30 | 60 | 90 | 120 |
| REF | - | - | 0.5 | 320 | 295 | 240 | 180 | 140 |
| REF | - | 0.3 | 0.8 | 310 | 305 | 270 | 230 | 200 |
| REF | - | 0.6 | 1.3 | 325 | 320 | 315 | 300 | 280 |
| 6B | 4% (HEDP) | - | 0.35 | 310 | 200 | 150 | 110 | 110 |
| 6B | 4% (HEDP) | 0.3 | 0.5 | 340 | 325 | 290 | 260 | 215 |
| 6B | 4% (HEDP) | 0.6 | 0.5 | 265 | 230 | 200 | 170 | 150 |

Ces résultats mettent en évidence l'effet intéressant des copolymères selon l'invention au niveau de la sensibilité à la présence de sulfates alcalins. En effet, on constate que le copolymère selon l'invention supporte des taux de sulfates alcalins dans le ciment bien supérieurs au plastifiant de référence.

Afin de mieux évaluer l'insensibilité aux ions sulfate apportée par la fonctionnalisation bis-phosphonique, les essais précédents ont été répétés, avec la même composition de mortier, en ajoutant une concentration croissante de sulfate de potassium mais en imposant un dosage constant.

Les résultats obtenus pour les copolymères de l'exemple 6A et 6B sont rassemblés dans le tableau 12 ci-dessous.

Les résultats démontrent que la fonctionnalisation par 4% d'HEDP permet d'effacer l'effet néfaste de 0,4% en poids de sulfate alcalin dans le ciment dans les conditions des essais.

On constate par ailleurs qu'un copolymère greffé par 2% d'HEDP dans un mortier de ciment chargé avec 0,3% en poids de sulfate de potassium présente un comportement analogue voire légèrement supérieur en maintien de rhéologie à celui de la référence. Autrement dit, un greffage de 2% d'HEDP du copolymère de référence permet d'effacer l'effet néfaste de 0,3% en poids de sulfate de potassium présent dans un ciment.

**Tableau 12 : Effet des sulfates- copolymères de l'exemple 6, dosage constant**

| **EX.** | **Greffage** [%molaire] | **K₂SO₄ ajouté** [% en poids] | **Dosage** [%] | **Etalement T** [min] | | | | |
|---|---|---|---|---|---|---|---|---|
| | | | | 5 | 30 | 60 | 90 | 120 |
| REF | - | - | 0.5 | 310 | 275 | 220 | 170 | 145 |
| 6A | 2% (HEDP) | - | 0.4 | 340 | 280 | 200 | 155 | 120 |
| 6A | 2% (HEDP) | 0.3 | 0.5 | 320 | 310 | 280 | 230 | 180 |
| 6A | 2% (HEDP) | 0.6 | 0.5 | 225 | 185 | 160 | 140 | 120 |
| REF | - | - | 0.5 | 320 | 300 | 255 | 200 | 160 |
| 6B | 4% (HEDP) | 0.3 | 0.5 | 340 | 325 | 290 | 260 | 215 |
| 6B | 4% (HEDP) | 0.4 | 0.5 | 320 | 300 | 255 | 210 | 175 |
| 6B | 4% (HEDP) | 0.5 | 0.5 | 295 | 270 | 215 | 185 | 160 |
| 6B | 4% (HEDP) | 0.6 | 0.5 | 265 | 230 | 200 | 170 | 150 |

L'utilisation des copolymères selon l'invention à titre de superplastifiant est donc moins sensible vis-à-vis des sulfates alcalins dans les ciments, comparée au copolymère non greffé. Cette observation peut être expliquée par un pouvoir complexant du groupe phosphonate vis-à-vis des ions calcium supérieur comparé aux ions sulfate.

### 3. Sensibilité aux argiles.

Les superplastifiants sont également sensibles à la présence d'argiles dans les compositions, généralement dans les sables.

Afin d'évaluer cette sensibilité des copolymères selon l'invention, l'étalement de mortiers formulés avec un sable pollué par une argile (montmorillonite KSF) a été mesuré et comparé avec celui d'un mortier formulé avec un sable propre non pollué.

Sauf indication contraire, le pourcentage d'argile est exprimé en % en poids sec par rapport au sable total sec, composé du sable AFNOR et du sablon FULCHIRON. L'argile ajoutée est introduite avec le sable avant ajout de l'eau de pré-mouillage.

Les mortiers ont été préparés selon la formulation indiquée dans le tableau 7 ci-dessus, en utilisant du ciment à fort taux d'alcalins (Ciment CEM I 52,5 N de Saint Pierre la Cour, commercialisé par la société Lafarge) et le copolymère selon l'exemple 9B (mélange EPB 762.014 greffé d'HEDP à 4% et EPB 729.028).

Les résultats des essais sont présentés dans le tableau 13 ci-dessous.

Ces résultats montrent que les copolymères selon l'invention étudiés sont nettement moins sensibles à l'argile présente dans les sables, au point de neutraliser largement l'effet néfaste de 1% en poids d'argile (par rapport au sable sec) sur la fluidité de la composition cimentaire.

**Tableau 13 : Effet d'argile - copolymère de l'exemple 9**

| **EX.** | **Greffage** [%molaire] | **Argile ajoutée*** [% en poids] | **Dosage** | **Etalement T** [min] | | | | |
|---|---|---|---|---|---|---|---|---|
| | | | | 5 | 30 | 60 | 90 | 120 |
| REF | - | - | 1.0 | 315 | 295 | 290 | 285 | 280 |
| REF | - | 1 | 1.0 | 180 | 160 | 145 | 120 | 110 |
| REF | - | 1 | 1.2 | 215 | 180 | 170 | 160 | 150 |
| 9B | 4% (HEDP) | 1 | 1.0 | 275 | 250 | 240 | 225 | 210 |
| 9B | 4% (HEDP) | 1 | 1.2 | 335 | 320 | 300 | 295 | 285 |

| | | | | | | | | |
|---|---|---|---|---|---|---|---|---|
| *L'argile ajoutée est une montmorillonite KSF commercialisée par ALDRICH | | | | | | | | |

### 4. Efficacité sur des ciments composés

Afin d'évaluer la robustesse des copolymères selon l'invention, l'effet superplastifiant a été étudié sur des ciments composés, de constitution différente.

Plus spécifiquement, on a testé un ciment comportant à titre de liant de substitution des cendres volantes (ciment CEM Il /A-V (Saint Pierre La Cour, commercialisé par la société LAFARGE). Les mortiers ont été préparés selon la formulation donnée dans le tableau 9 et adjuvantés avec différents dosages de copolymère de l'exemple 9B.

Les valeurs d'étalement obtenues pour ces mortiers sont rassemblées dans le tableau 14 ci-dessous.

**Tableau 14 : Effet sur ciment à cendres volantes**

| **EX.** | **Greffage** [% molaire] | **Dosage** [%] | **Etalement T** [min] | | | | |
|---|---|---|---|---|---|---|---|
| | | | 5 | 30 | 60 | 90 | 120 |
| REF | - | 1.0 | 325 | 315 | 310 | 300 | 260 |
| 9B | 4% (HEDP) | 1.0 | 360 | 370 | 380 | 380 | 370 |
| 9B | 4% (HEDP) | 0.8 | 320 | 340 | 345 | 340 | 320 |

Les résultats obtenus montrent qu'en présence de cendres volantes, les copolymères selon l'invention ont un pouvoir réducteur d'eau plus élevé que le superplastifiant de référence.

Par ailleurs, on note qu'une réduction du dosage de 20% du copolymère selon l'invention permet l'obtention d'une composition cimentaire présentant un comportement rhéologique en termes de maintien de fluidité supérieur à celui du superplastifiant de référence.

D'autre part, on a testé un ciment comportant à titre de liant de substitution un laitier (CEM III/A 42,5 N-LH PM-ES-CP1 (commercialisé par la société Lafarge) de composition suivante :
- Clinker 35% en poids (C3A 8,6% - C3S 60% - C4AF 11)
- Laitier 62% en poids
- Constituants secondaires 3% en poids
- Gypse 4,8% en poids.

Les mortiers ont été préparés selon la formulation donnée dans le tableau 9 et adjuvantés avec différents dosages de copolymère de l'exemple 9B.

Les valeurs d'étalement obtenues pour ces mortiers sont rassemblées dans le tableau 15 ci-dessous.

**Tableau 15 : Effet sur ciment à laitier**

| **EX.** | **Greffage** [% molaire] | **Dosage** [%] | **Etalement T** [min] | | | | |
|---|---|---|---|---|---|---|---|
| | | | 5 | 30 | 60 | 90 | 120 |
| REF | - | 0.5 | 325 | 345 | 330 | 300 | 280 |
| 9B | 4% (HEDP) | 0.5 | 380 | 390 | 380 | 330 | 310 |
| 9B | 4% (HEDP) | 0.4 | 325 | 320 | 260 | 225 | 190 |

Les résultats obtenus montrent qu'en présence de laitier comme liant de substitution, les copolymères selon l'invention ont un pouvoir réducteur d'eau plus élevé que le superplastifiant de référence.

Les données expérimentales ci-dessus confirment l'intérêt des copolymères selon l'invention à titre de superplastifiant pour des compositions de liants hydrauliques. Ces copolymères présentent en effet un pouvoir réducteur d'eau très élevé, une faible sensibilité aux sulfates alcalins et aux argiles ainsi qu'une robustesse élevée et un bon maintien de rhéologie dans une large gamme de taux d'ester.

## Revendications

1. Copolymère comprenant une chaîne principale hydrocarbonée et des groupes latéraux, dans lequel les groupes latéraux comprennent des groupes carboxyliques, des groupes polyoxyalkylés et des groupes gem-bisphosphonés.

2. Copolymère selon la revendication 1, dans lequel les groupes latéraux polyoxyalkylés sont liés à la chaîne principale par une liaison ester, éther ou amide.

3. Copolymère selon l'une des revendications 1 ou 2, dans lequel les groupes gem-bisphosphonés sont issus d'un greffage avec un composé choisi parmi l'acide 1-hydroxyéthylène -1,1 -bisphosphonique (**HEDP**), l'acide 1-hydroxy-3-amino-propylène-1,1-bisphosphonique (**AHP**) et l'acide 1-hydroxy-4-amino-butylène-1,1-bisphosphonique (**BHP**).

4. Copolymère selon l'une des revendications 1 ou 2, dans lequel les groupes latéraux gem-bisphosphonés répondent à la formule (IA) ci-dessous : 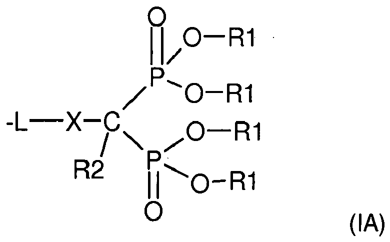 dans laquelle :
L représente un groupe de liaison à la chaîne principale, en particulier une liaison, un atome d'oxygène, un groupe -NR₄-, (R₄ pouvant être hydrogène ou un groupe alkyle en C₁ à C₆), ou un groupe alkylène, de préférence, L est un atome d'oxygène ou un groupe -NR₄-;
X est un groupe espaceur, en particulier un groupe alkylène en C₁ à C₂₀ éventuellement substitué ou un enchaînement de groupes de formule -(QO)ₙ-dans laquelle Q représente un groupe alkylène de 2 à 4 atomes de carbone ou un mélange de ces groupes d'alkylène, n étant un nombre entier variant de 1 à 500, de préférence, X est un groupe alkylène en C₁ à C₆;
R1 est, indépendamment les uns des autres, un groupe monovalent, notamment hydrogène, un groupe alkyle de C₁ à C₆ ou groupe de formule -(QO)ₙR₅ dans laquelle Q représente un groupe alkylène de 2 à 4 atomes de carbone ou un mélange de ces groupes d'alkylène, n est un nombre entier variant de 1 à 500 et R₅ est hydrogène ou un alkyle en C₁ à C₃, ou R1 est un cation, notamment un cation alcalin, alcalino-terreux ou ammonium; et
R2 est un atome d'hydrogène, un groupe hydroxyle ou groupe alkyle en C₁ à C₁₀.

5. Copolymère selon la revendication 4, dans lequel les groupes gem-bisphosphonés sont de formule (IA), L étant un atome d'oxygène, un groupe amide ou un groupe ester.

6. Copolymère selon la revendication 4 ou 5, dans lequel les groupes gem-bisphosphonés sont de formule (IA), X étant un groupe alkylène en C₁ à C₆.

7. Copolymère selon l'une des revendications 4 à 6, dans lequel les groupes gem-bisphosphonés sont de formule (IA), R₁ étant un atome d'hydrogène ou un cation alcalin, alcalino-terreux ou ammonium.

8. Copolymère selon l'une des revendications 4 à 7, dans lequel les groupes gem-bisphosphonés sont de formule (IA), R² étant un groupe hydroxyle.

9. Copolymère selon l'une des revendications 1 à 8, dans lequel les groupes polyoxyalkylés sont de formule (II) ci-dessous :
-Rₑ-Z-A (II)
dans laquelle :
Rₑ est un groupe alkylène en C₁ à C₁₂ ou un groupe C=O ou encore absent ; et
Z est un atome d'oxygène ou un groupe N-R⁴, R⁴ pouvant être un hydrogène ou un groupe alkyle en C₁ à C₆ ; et
A est un groupe de formule -(QO)ₙ-R³ dans laquelle :
Q représente un groupe alkylène de 2 à 4 atomes de carbone ou un mélange de ces groupes d'alkylènes ;
n est un nombre entier variant de 1 à 500 ; et
R³ représente un atome d'hydrogène ou un groupe alkyle, aryle, alkylaryle ou arylalkyle en C₁ à C₁₂.

10. Copolymère selon la revendication 9, dans lequel dans les groupes polyoxyalkylés de formule (II), A est un groupe de formule -(QO)ₙ-R³ dans laquelle R³ est un méthyle.

11. Copolymère selon l'une des revendications 1 à 10, dans lequel les groupes carboxyliques répondent à la formule (III) ci-dessous :
-C(O)-O-R_{d} (III)
dans laquelle :
R_{d} représente H ou un groupe alkyle, aryle, alkylaryle ou arylalkyle en C₁ à C₁₂, ou un cation alcalin, alcalino-terreux ou ammonium.

12. Procédé de préparation d'un copolymère selon l'une des revendications 1 à 11, comprenant les étapes consistant à :
(i) polymériser un monomère portant un groupe carboxylique, éventuellement en présence d'un monomère portant un groupe polyoxyalkylé; et
(ii) greffer le polymère obtenu avec un composé réactif gem-bisphosphoné.

13. Procédé selon la revendication 12, dans lequel le composé réactif gem-bisphosphoné est choisi parmi l'acide 1-hydroxyéthylène -1,1 -bisphosphonique (**HEDP**), l'acide 1-hydroxy-3-amino-propylène-1,1-bisphosphonique (**AHP**) et l'acide 1-hydroxy-4-amino-butylène-1,1-bisphosphonique (**BHP**).

14. Adjuvant pour suspensions de particules minérales comprenant le copolymère selon l'une des revendications 1 à 11, sous forme de solution dans un solvant approprié.

15. Adjuvant selon la revendication 14, comprenant 1 à 50, de préférence 10 à 30% en poids de copolymère par rapport au poids total.

16. Utilisation du copolymère selon l'une des revendications 1 à 11 pour la fluidification de suspensions de particules minérales.

17. Utilisation du copolymère selon l'une des revendications 1 à 11 pour le maintien de l'ouvrabilité de liants hydrauliques.

18. Utilisation du copolymère selon l'une des revendications 1 à 11 pour réduire la sensibilité de compositions hydrauliques aux argiles.

19. Utilisation du copolymère selon l'une des revendications 1 à 11 pour réduire la sensibilité de liants hydrauliques aux sulfates alcalins.

20. Composition de particules minérales comprenant le copolymère selon l'une des revendications 1 à 11.

## Patentansprüche

1. Copolymer, eine Hauptkohlenwasserstoffkette und Seitengruppen umfassend, bei dem die Seitengruppen Carboxylgruppen, polyoxyalkylierte Gruppen und gem-bisphosphonierte Gruppen umfassen.

2. Copolymer nach Anspruch 1, bei dem die polyoxyalkylierten Seitengruppen durch eine Ester-, Ether- oder Amidbindung an die Hauptkette gebunden sind.

3. Copolymer nach einem der Ansprüche 1 oder 2, bei dem die gem-biphosphonierten Gruppen aus einer Pfropfung mit einer Verbindung, ausgewählt aus 1-Hydroxyethylen-1,1-Bisphosphonsäure (HEDP), 1-Hydroxy-3-Aminpropylen-1,1-Bisphosponsäure (AHP) und 1-Hydroxy-4-Aminobutylen-1,1-Bisphosphonsäure (BHP) stammen.

4. Copolymer nach einem der Ansprüche 1 oder 2, bei dem die gembisphosphonierten Seitengruppen der folgenden Formel (IA) entsprechen: 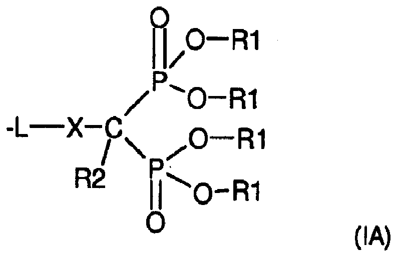 bei der:
Leine Bindungsgruppe an die Hauptkette, insbesondere eine Bindung, ein Sauerstoffatom, eine -NR₄-Gruppe, (R₄ kann ein Wasserstoff oder eine C₁ bis C₆-Alkylgruppe sein), oder vorzugsweise eine Alkylengruppe darstellt, L ein Sauerstoffatom oder eine -NR₄- Gruppe ist;
X eine Spacergruppe ist, insbesondere eine gegebenenfalls substituierte C₁ bis C₂₀-Alkylengruppe, oder eine Verkettung von Gruppen der Formel -(QO)ₙ-, wobei Q eine Alkylengruppe mit 2 bis 4 Kohlenstoffatomen oder eine Mischung aus diesen Alkylengruppen darstellt, wobei n eine ganze Zahl ist, die vorzugweise zwischen 1 und 500 variiert, X eine C₁ bis C₆-Alkylengruppe mit ist;
R1 unabhängig voneinander eine monovalente Gruppe, insbesondere Wasserstoff, eine C₁ bis C₆-Alkylgruppe oder eine Gruppe der Formel -(QO)ₙR₅ ist, in der Q eine Alkylengruppe mit 2 bis 4 Kohlenstoffatomen oder eine Mischung dieser Alkylengruppen darstellt, n eine ganze Zahl ist, die von 1 bis 500 variiert; und R₅ ein Wasserstoff oder ein C₁ bis C₃-Alkyl ist, oder R1 ein Kation, insbesondere ein Alkali-, Erdalkali- oder ein Amoniumkation, ist; und
R2 ein Wasserstoffatom, eine Hydroxylgruppe oder eine C₁ bis C₁₀-Alkylgruppe ist.

5. Copolymer nach Anspruch 4, bei dem die gem-biphosphonierten Gruppen die Formel (IA) aufweisen, wobei Lein Sauerstoffatom, eine Amidgruppe oder eine Estergruppe ist.

6. Copolymer nach Anspruch 4 oder 5, bei dem die gem-biphosphonierten Gruppen die Formel (IA) aufweisen, wobei X eine C₁ bis C₆-Alkylengruppe ist.

7. Copolymer nach einem der Ansprüche 4 bis 6, bei dem die gem-biphosphonierten Gruppen die Formel (IA) aufweisen, wobei R₁ ein Wasserstoffatom oder ein Alkali-, Erdalkali- oder Ammoniumkation ist.

8. Copolymer nach einem der Ansprüche 4 bis 7, bei dem die gembiphosponierten Gruppen die Formel (IA) aufweisen, wobei R² eine Hydroxylgruppe ist.

9. Copolymer nach einem der Ansprüche 1 bis 8, bei dem die polyoxyalkylierten Gruppen die folgende Formel (II) aufweisen:
-Re-Z-A (II)
bei der:
Rₑ eine C₁ bis C₁₂-Alkylengruppe oder eine C=O-Gruppe oder noch abwesend ist; und
Z ein Sauerstoffatom oder eine N-R⁴-Gruppe ist, wobei R4 ein Wasserstoff oder eine C₁ bis C₆-Alkylgruppe sein kann; und
A eine Gruppe der Formel -(QO)ₙ-R³ ist, bei der:
Q eine Alkylengruppe mit 2 bis 4 Kohlenstoffatomen oder eine Mischung dieser Alkylengruppen darstellt;
n eine ganze Zahl ist, die von 1 bis 500 variiert; und
R³ ein Wasserstoffatom oder eine C₁ bis C₁₂-Alkyl-, C₁ bis C₁₂-Aryl-, C₁ bis C₁₂-Alkylaryl- oder C₁ bis C₁₂-Arylalkylgruppe darstellt.

10. Copoylmer nach Anspruch 9, bei dem in den polyoxyalkylierten Gruppen der Formel (II) A eine Gruppe der Formel -(QO)ₙ-R³ ist, in der R³ ein Methyl ist.

11. Copolymer nach einem der Ansprüche 1 bis 10, bei dem die Carboxylgruppen die folgende Formel (III) aufweisen:
-C(O)-O-R_{d} (III)
in der:
R_{d} H oder eine C₁ bis C₁₂-Alkyl-, C₁ bis C₁₂-Aryl-, C₁ bis C₁₂-Alkylaryl- oder C₁ bis C₁₂-Arylalkylgruppe oder ein Alkali-, Erdalkali- oder Ammoniumkation darstellt.

12. Verfahren zur Herstellung eines Copolymers nach einem der Ansprüche 1 bis 11 mit den Schritten, die darin bestehen:
(i) ein eine Carboxylgruppe tragendes Monomer gegebenenfalls bei Vorhandensein eines eine polyoxyalkylierte Gruppe tragendes Monomer zu polymerisieren; und
(ii) das erhaltene Polymer mit einer reaktiven gem-biphosphonierten Verbindung zu pfropfen.

13. Verfahren nach Anspruch 12, bei dem die reaktive gem-biphosphonierte Gruppe ausgewählt ist aus 1-Hydroxyethylen-1,1-Bisphosphonsäure (HEDP), 1-Hydroxy-3-Aminopropylen-1, 1-Bisphosphonsäure (AHP) und 1-Hydroxy-4-Aminobutylen-1,1-Bisphosphonsäure (BHP).

14. Hilfsmittel für Suspensionen von Mineralpartikeln, das das Copolymer nach einem der Ansprüche 1 bis 11 umfasst, in Form einer Lösung in einem geeigneten Lösungsmittel.

15. Hilfsmittel nach Anspruch 14, das 1 bis 50, vorzugsweise 10 bis 30 Gew.-% an Polymer in Bezug auf das Gesamtgewicht umfasst.

16. Verwendung eines Copolymers nach einem der Ansprüche 1 bis 11 für die Verflüssigung von Mineralpartikel-Suspensionen.

17. Verwendung des Copolymers nach einem der Ansprüche 1 bis 11 für den Erhalt der Bearbeitbarkeit von hydraulischen Bindemitteln.

18. Verwendung des Copolymers nach einem der Ansprüche 1 bis 11 zur Verringerung der Empfindlichkeit von hydraulischen Zusammensetzungen gegenüberTonen.

19. Verwendung des Copolymers nach einem der Ansprüche 1 bis 11 zur Verringerung der Empfindlichkeit von hydraulischen Bindemitteln gegenüber Alkalisulfaten.

20. Mineralpartikelzusammensetzung, das Copolymer nach einem der Ansprüche 1 bis 11 umfassend.

## Claims

1. A copolymer comprising a main hydrocarbon chain and side groups, wherein the side groups comprise carboxylic groups, polyoxyalkylene groups and gem-bisphosphonate groups.

2. The copolymer according to claim 1, wherein the polyoxyalkylene side groups are bound to the main chain through an ester, ether or amide bond.

3. The copolymer according to one of claims 1 or 2, wherein the gem-bisphosphonate groups stem from grafting with a compound selected from 1-hydroxyethylene-1,1-bisphosphonic acid (HEDP), 1-hydroxy-3-amino-propylene-1,1-bisphosphonic acid (AHP) and 1-hydroxy-4-amino-butylene-1,1-bisphosphonic acid (BHP).

4. The copolymer according to one of claims 1 or 2, wherein the gem-bisphosphonate side groups fit the formula (IA) below the: 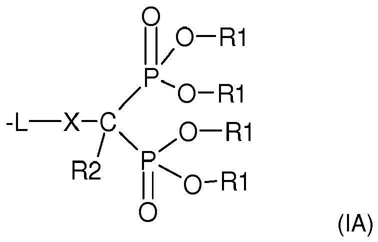 wherein:
L represents a group for binding to the main chain, in particular a bond, and oxygen atom, a group -NR₄-, (R₄ being a hydrogen or a C₁-C₆ alkyl group), or an alkylene group, preferably, L is an oxygen atom or a group -NR₄-;
X is a spacer group, in particular a C₁-C₂₀ alkylene group optionally substituted or a chain of groups of formula -(QO)ₙ- wherein Q represents an alkylene group with 2 to 4 carbon atoms or a mixture of these alkylene groups, n being an integer varying from 1 to 500, preferably, X is a C₁-C₆ alkylene group;
R1 is, independently of each other, a monovalent group, notably a hydrogen, a C₁-C₆ alkyl group or a group of formula -(QO)ₙR₅ wherein Q represents an alkylene group with 2 to 4 carbon atoms or a mixture of these alkylene groups, n is an integer varying from 1 to 500 and R₅ is a hydrogen or a C₁-C₃ alkyl or R1 is a cation, notably an alkali metal, alkaline earth metal or ammonium cation; and
R2 is a hydrogen atom, a hydroxyl group or a C₁-C₁₀ alkyl group.

5. The copolymer according to claim 4, wherein the gem-bisphosphonate groups are of formula (IA), L being an oxygen atom, an amide group or an ester group.

6. The copolymer according to claim 4 or 5, wherein the gem-bisphosphonate groups are of formula (IA), X being a C₁-C₆ alkylene group.

7. The copolymer according to one of claims 4 to 6, wherein the gem-bisphosphonate groups are of formula (IA), R₁ being a hydrogen atom or an alkali metal, earth alkaline metal or ammonium cation.

8. The copolymer according to one of claims 4 to 7, wherein the gem-bisphosphonate groups are of formula (IA), R² being a hydroxyl group.

9. The copolymer according to one of claims 1 to 8, wherein the polyoxyalkylene groups are of the formula (II) below:
-Rₑ-Z-A (II)
wherein:
Rₑ is a C₁-C₁₂ alkylene group or a C=O group or is further absent; and
Z is an oxygen atom or a group N-R⁴, R⁴ may be a hydrogen or a C₁-C₆ alkyl group; and
A is a group of formula -(QO)ₙ-R³ wherein:
Q represents an alkylene group with 2 to 4 carbon atoms or a mixture of these alkylene groups;
n is an integer varying from 1 to 500; and
R³ represents a hydrogen atom or a C₁-C₁₂ alkyl, aryl, alkylaryl or arylalkyl group.

10. The copolymer according to claim 9, wherein, in the polyoxyalkylene groups of formula (II), A is a group of formula -(QO)ₙ-R³ wherein R³ is a methyl.

11. The copolymer according to one of claims 1 to 10, wherein the carboxylic groups fit the formula (III) below:
-C(O)-O-R_{d} (III)
wherein:
R_{d} represents H or or a C₁-C₁₂ alkyl, aryl, alkylaryl or arylalkyl group or an alkali metal, alkaline earth metal or ammonium cation.

12. A method for preparing a copolymer according to one of claims 1 to 11, comprising the steps:
(i) polymerizing a monomer bearing a carboxylic group, optionally in the presence of a monomer bearing a polyoxyalkylene group; et
(ii) grafting the obtained polymer with a reactive gem-bisphosphonate compound.

13. The method according to claim 12, wherein the reactive gem-bisphosphonate compound is selected from 1-hydroxyethylene-1,1-bisphosphonic acid (**HEDP**), 1-hydroxy-3-amino-propylene-1,1-bisphosphonic acid (A**H**P) and 1-hydroxy-4-amino-butylene-1,1-bisphosphonic acid (**BHP**).

14. An admixture for suspensions of mineral particles comprising the copolymer according to one of claims 1 to 11, as a solution in a suitable solvent.

15. The admixture according to claim 14, comprising 1 to 50, preferably 10 to 30% by weight of copolymer based on the total weight.

16. The use of the copolymer according to one of claims 1 to 11 for fluidifying suspensions of mineral particles.

17. The use of the copolymer according to one of claims 1 to 11 for maintaining workability of hydraulic binders.

18. The use of the copolymer according to one of claims 1 to 11 for reducing the sensitivity of hydraulic compositions to clays.

19. The use of the copolymer according to one of claims 1 to 11 for reducing the sensitivity of hydraulic binders to alkaline sulfates.

20. A composition of mineral particles comprising the copolymer according to one of claims 1 to 11.
